# EUROPEAN PATENT APPLICATION

(11) **EP 4 611 171 A1**
(43) Date of publication of application: **03.09.2025**
(21) Application number: 23887622.1
(22) Date of filing: 07.09.2023
(51) Int. Cl.: H01Q 1/38

(54) **DUAL-POLARIZED ANTENNA UNIT, ANTENNA APPARATUS, AND BASE STATION SYSTEM**

(30) Priority: 09.11.2022 CN 202211397101
(71) Applicant: Huawei Technologies Co., Ltd., Shenzhen, Guangdong 518129 (CN)
(72) Inventor: DU, Zijing, Shenzhen, Guangdong 518129 (CN); WAN, Zhenxing, Shenzhen, Guangdong 518129 (CN); WANG, Mengfan, Shenzhen, Guangdong 518129 (CN); LIU, Lang, Shenzhen, Guangdong 518129 (CN); WANG, Xiaodong, Shenzhen, Guangdong 518129 (CN)
(74) Representative: Grünecker Patent- und Rechtsanwälte PartG mbB
(86) International application number: PCT/CN2023/117373
(87) International publication number: WO 2024/098928

(57) **Abstract**

This application provides a dual-polarized antenna element, an antenna apparatus, and a base station system. The dual-polarized antenna element includes a radiator, a first feeding structure, a second feeding structure, a first balancer, and a second balancer. A first feeding part and a second feeding part are integrally formed on the radiator, and can be separately connected to a corresponding feeding structure. The radiator is provided with a through hole. The first balancer and the second balancer both pass through the through hole. The balancers are coupled to the radiator through respective coupling parts. The balancers are grounded through respective ground parts. The first feeding structure is coupled to or directly connected to the first feeding part. The second feeding structure is coupled to or directly connected to the second feeding part. **In** this application, a structure of the antenna element is simplified, and two types of polarization on the radiator can meet a requirement on isolation between antennas by using a design of the balancer, so that a stable directivity pattern can be obtained, and performance of the antenna element is ensured.

## Description

This application claims priority to Chinese Patent Application No. 202211397101.8, filed with the China National Intellectual Property Administration on November 9, 2022 and entitled "DUAL-POLARIZED ANTENNA ELEMENT, ANTENNA APPARATUS, AND BASE STATION SYSTEM", which is incorporated herein by reference in its entirety.

### TECHNICAL FIELD

This application relates to the field of communication technologies, and in particular, to a dual-polarized antenna element, an antenna apparatus, and a base station system.

### BACKGROUND

For a conventional dual-polarized antenna, radiation arms of the dual-polarized antenna are independent of each other, and the radiation arms and a feeding structure are independent of each other. Consequently, manufacturing, processing, and assembly of the radiation arms and the feeding structure are complex, costs are high, and integrity of the antenna is poor.

### SUMMARY

An objective of this application is to provide a dual-polarized antenna element, an antenna apparatus, and a base station system, to resolve problems in the conventional technologies that manufacturing, processing, and assembly of a dual-polarized antenna are complex, costs are high, and integrity is poor.

A first aspect of this application provides a dual-polarized antenna element, including:
a radiator, where a first feeding part and a second feeding part are integrally formed on the radiator, the radiator is provided with a through hole, and the through hole is located between the first feeding part and the second feeding part;
a first feeding structure, coupled to or directly connected to the first feeding part;
a second feeding structure, coupled to or directly connected to the second feeding part;
a first balancer, where the first balancer passes through the through hole, the first balancer includes a first coupling part and a first ground part, the first coupling part and the first ground part are respectively located on two sides of the radiator, and the first coupling part is coupled to the radiator; and
a second balancer, where the second balancer passes through the through hole, the second balancer includes a second coupling part and a second ground part, the second coupling part and the second ground part are respectively located on the two sides of the radiator, and the second coupling part is coupled to the radiator.

The first feeding part and the second feeding part are integrally formed on the radiator, so that the radiator, the first feeding part, and the second feeding part form a mechanical part. In other words, the radiator, the first feeding part, and the second feeding part are integrally formed by using an independent sheet metal part, so that a structure is simplified, and integrity of an antenna is improved. The first feeding part and the second feeding part are located on two sides of the through hole, so that isolation between parts near the first feeding part and the second feeding part can be improved, thereby improving radiation performance.

Through the provision of the first balancer and the second balancer, an electric field of the radiator may be more even, so that isolation between two parts whose polarization directions are different on the radiator can meet a requirement on isolation between antennas. Therefore, a stable dual-polarized characteristic can be formed on one radiator, and the dual-polarized antenna element can achieve a stable directivity pattern. In addition, a size of the antenna element can be reduced, miniaturization can be implemented, and space occupation can be reduced, thereby facilitating integration into a base station antenna.

In a possible design, the first feeding part includes one first feeding bent section, and the first feeding bent section is connected to the first feeding structure to generate a first electromagnetic wave signal in a first polarization direction. The second feeding part includes one second feeding bent section, and the second feeding bent section is connected to the second feeding structure to generate a second electromagnetic wave signal in a second polarization direction.

In a possible design, the first feeding part includes two first feeding bent sections, and the two first feeding bent sections are disposed in a centrally symmetric manner to generate a first electromagnetic wave signal in a first polarization direction. The second feeding part includes two second feeding bent sections, and the two second feeding bent sections are disposed in a centrally symmetric manner to generate a second electromagnetic wave signal in a second polarization direction. In this way, radiation performance of the antenna can be further improved.

In a possible design, in a thickness direction of the radiator, projection of the first coupling part and projection of at least a part of the radiator overlap, and projection of the second coupling part and projection of at least a part of the radiator overlap. In this way, the first coupling part can separately correspond to parts that are on the radiator and that are located on two sides of a first gap, thereby improving an effect of current coupling between the first coupling part and the radiator, and helping make an electric field near the first gap more even, to obtain a stable directivity pattern. Similarly, the second coupling part also has a same effect as the first coupling part, and details are not described herein again. Therefore, the first coupling part and the second coupling part can ensure evenness of an electric field of the dual-polarized antenna element, and ensure stability of the directivity pattern.

In a possible design, the first balancer includes a first connection section. The first connection section passes through the through hole. The first coupling part and the first ground part are respectively connected to two ends of the first connection section. An angle between the first connection section and a radiation surface of the radiator ranges from 80° to 100°. In this way, the first connection section can be made nearly perpendicular to the radiation surface of the radiator, in other words, a direction of a current on the first connection section is nearly perpendicular to a direction of the electric field of the radiator, so that the current on the first connection section can be prevented from being coupled with a current on the radiator. Therefore, the antenna can achieve excellent radiation performance and a stable directivity pattern.

In a possible design, the second balancer includes a second connection section. The second connection section passes through the through hole. The second coupling part and the second ground part are respectively connected to two ends of the second connection section. An angle between the second connection section and the radiation surface of the radiator ranges from 80° to 100°. A bending direction of the second coupling part and a bending direction of the first coupling part are opposite. A function and an arrangement effect of the second connection section are the same as those of the first connection section, and details are not described herein again. The bending direction of the first coupling part and the bending direction of the second coupling part are away from each other, so that the first coupling part and the second coupling part can be separately coupled to the radiator near the first gap and a second gap, thereby improving an electric field balance effect and helping obtain a stable directivity pattern.

In a possible design, an angle between the first coupling part and the radiation surface of the radiator and an angle between the second coupling part and the radiation surface of the radiator range from 0° to 10°. In this way, the first coupling part and the second coupling part can have large areas and can be coupled to the radiator, thereby improving an effect of even distribution of the electric field.

In a possible design, the first coupling part and the second coupling part are separately parallel to the radiation surface of the radiator.

In a possible design, a distance between the first coupling part and the radiation surface of the radiator and a distance between the second coupling part and the radiation surface of the radiator are less than 0.1 times a wavelength corresponding to a maximum operating frequency. In this way, a large bandwidth can be obtained, and it is ensured that the dual-polarized antenna element achieves good radiation performance and a stable directivity pattern.

In a possible design, a maximum distance between the first coupling part and the first ground part ranges from 0.25 times to 0.75 times a wavelength corresponding to a maximum operating frequency, and a maximum distance between the second coupling part and the second ground part ranges from 0.25 times to 0.75 times the wavelength corresponding to the maximum operating frequency. Therefore, the dual-polarized antenna element can achieve a constant directivity pattern, and has good radiation performance and isolation performance.

In a possible design, an angle between the first feeding part and the radiation surface of the radiator and an angle between the second feeding part and the radiation surface of the radiator range from 60° to 120°. In this way, the first feeding part and the second feeding part can be separately nearly perpendicular to the radiation surface of the radiator. In other words, a direction of a current on the first feeding part and a direction of a current on the second feeding part are nearly perpendicular to the direction of the electric field of the radiator, so that the current on the first feeding part and the current on the second feeding part can be prevented from being coupled with the current on the radiator before arriving at the radiator. Therefore, the antenna can achieve the excellent radiation performance and the stable directivity pattern.

In a possible design, the dual-polarized antenna element further includes a reflection panel. The reflection panel is located on a side that is of the radiator and that is away from the radiation surface of the radiator. The first ground part and the second ground part are separately coupled to or directly connected to the reflection panel.

The reflection panel can reflect an electromagnetic wave radiated by a surface of a side that is of the radiator and that is away from the radiation surface, so that a radiation direction of the reflected electromagnetic wave is consistent with a radiation direction of the radiation surface, thereby enhancing electromagnetic wave energy and improving the radiation performance of the antenna.

In a possible design, a plurality of dual-polarized antenna elements share one reflection panel. In this way, integrity of the plurality of dual-polarized antenna elements can be improved, and radiation performance of an antenna apparatus having the plurality of dual-polarized antenna elements can be improved.

In a possible design, the first ground part and the second ground part are connected to form an integrated structure. In this way, grounding consistency between the first balancer and the second balancer can be ensured. The first balancer and the second balancer may alternatively be designed as one part, facilitating production and manufacturing, and facilitating assembly of the balancer in the dual-polarized antenna element.

In a possible design, the dual-polarized antenna element further includes a third balancer and a fourth balancer. Structures of the third balancer and the fourth balancer are the same as structures of the first balancer and the second balancer. The third balancer and the fourth balancer both pass through the through hole. The third balancer is centrally symmetrical to the first balancer. The fourth balancer is centrally symmetrical to the second balancer. Through the provision of the four balancers, the dual-polarized antenna element can obtain a better polarization effect.

In a possible design, the radiator is a metal plate.

In a possible design, the first feeding part and the second feeding part are integrally formed on the radiator by using a stamping and bending process.

A second aspect of this application further provides an antenna apparatus, including the dual-polarized antenna element according to the first aspect of this application.

A third aspect of this application further provides a base station system, including the antenna apparatus according to the second aspect of this application.

It should be understood that the foregoing general descriptions and the following detailed descriptions are merely examples, and are not intended to limit this application.

### BRIEF DESCRIPTION OF DRAWINGS

FIG. 1 is a diagram of a structure of a base station system in some embodiments according to this application;
FIG. 2 is a diagram of a structure of an antenna apparatus in some embodiments according to this application;
FIG. 3 is a diagram of a structure of a dual-polarized antenna element from a perspective according to an embodiment of this application;
FIG. 4 is a diagram of a structure of a dual-polarized antenna element from another perspective according to an embodiment of this application;
FIG. 5 is a diagram of a structure of a dual-polarized antenna element from still another perspective according to an embodiment of this application;
FIG. 6 is a diagram of a structure of a radiator according to an embodiment of this application;
FIG. 7 is a diagram of a structure of a radiator according to another embodiment of this application;
FIG. 8 is a diagram of a structure of a dual-polarized antenna element from a perspective according to another embodiment of this application;
FIG. 9 is a diagram of a structure of a dual-polarized antenna element from another perspective according to another embodiment of this application;
FIG. 10 is a diagram of a structure of a dual-polarized antenna element from another perspective according to another embodiment of this application;
FIG. 11 is a diagram of a structure of a first balancer and a second balancer in a dual-polarized antenna element according to another embodiment of this application;
FIG. 12 is a top view of a dual-polarized antenna element according to another embodiment of this application;
FIG. 13 is a side view of a dual-polarized antenna element according to another embodiment of this application;
FIG. 14 is a diagram of a structure of a dual-polarized antenna element from a perspective according to still another embodiment of this application;
FIG. 15 is a diagram of a structure of an antenna array according to an embodiment of this application;
FIG. 16 is a diagram of a structure of fitting of a first balancer, a second balancer, a third balancer, and a fourth balancer;
FIG. 17 is a diagram of a structure of a dual-polarized antenna element having four balancers according to an embodiment of this application; and
FIG. 18 is a diagram of a structure of a dual-polarized antenna element having four balancers according to another embodiment of this application.

### Reference numerals:

100-Antenna apparatus;
   101-Antenna array;
   102-Feeding network;
   103-Phase shifter;
   104-Transmission network;
   105-Combiner;
   106-Antenna connector;
   107-Radome;
200-Antenna adjustment support;
300-Fastening pole;
400-Connector sealing member;
500-Ground apparatus;
10-Dual-polarized antenna element;
   1-Radiator;
   11-First feeding part;
      111-First feeding bent section;
   12-Second feeding part;
      121-Second feeding bent section;
   13-Through hole;
   14-First gap;
   15-Second gap;
   16-Gap;
   17-Radiation surface;
2-First feeding structure;
3-Second feeding structure;
4-First balancer;
   41-First coupling part;
   42-First ground part;
   43-First connection section;
5-Second balancer;
   51-Second coupling part;
   52-Second ground part;
   53-Second connection section;
6-Third balancer;
7-Fourth balancer;
8-Reflection panel.

The accompanying drawings herein are incorporated into this specification and constitute a part of this specification, to show embodiments in accordance with this application, and are used together with this specification to explain the principle of this application.

### DESCRIPTION OF EMBODIMENTS

To better understand technical solutions of this application, the following describes embodiments of this application in detail with reference to the accompanying drawings. It should be understood that the specific embodiments described herein are merely used to explain this application but are not intended to limit this application.

In descriptions of this application, unless otherwise specified and limited, the terms "first" and "second" are merely intended for a purpose of description, and should not be understood as an indication or implication of relative importance. Unless otherwise specified or stated, the term "a plurality of" means two or more than two. The terms "connection", "fastening", and the like should be understood in a broad sense. For example, the "connection" may be a fixed connection, or may be a detachable connection, an integrated connection, or an electrical connection, or may be a direct connection, or may be an indirect connection by using an intermediate medium. A person of ordinary skill in the art may understand specific meanings of the foregoing terms in this application according to specific situations.

With rapid development of 5G communication technologies, it is required that a base station antenna can implement higher performance at limited costs. In this application scenario, a design of a radiation unit in the base station antenna also faces a higher challenge. For a conventional dual-polarized antenna, radiation arms of the dual-polarized antenna are independent of each other, and the radiation arms and a feeding structure are independent of each other. Consequently, manufacturing, processing, and assembly of the radiation arms and the feeding structure are complex, costs are high, and integrity of the antenna is poor.

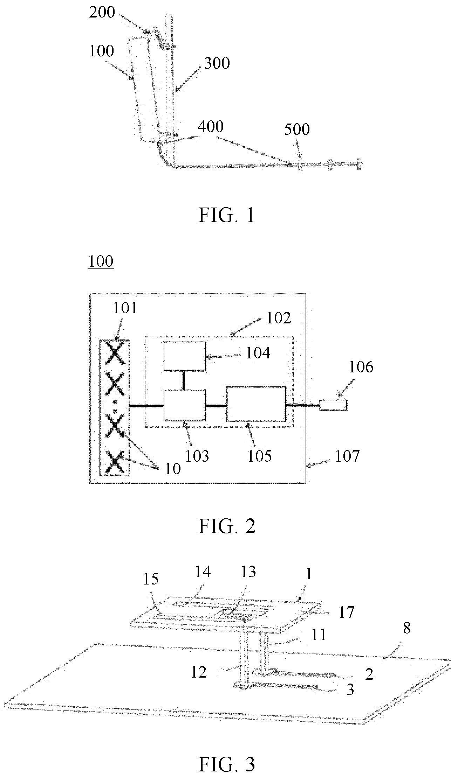

As shown in FIG. 1 and FIG. 2, an embodiment provides a dual-polarized antenna element 10, an antenna apparatus 100, and a base station system. The base station system, the antenna apparatus 100, and the dual-polarized antenna element 10 may be used in fields such as radar, broadcast, and communication. As shown in FIG. 1, the base station system includes the antenna apparatus 100, an antenna adjustment support 200, a fastening pole 300, a connector sealing member 400, a ground apparatus 500, and the like. The base station system is an interface device for wireless communication and can exchange information with a communication terminal in a region in which the base station system is located.

As shown in FIG. 2, the antenna apparatus 100 includes an antenna array 101, a phase shifter 103, a transmission network 104 or a calibration network, a combiner 105 or a waver, and a radome 107. The antenna array 101 receives or transmits a radio frequency signal by using a feeding network 102 formed by the phase shifter 103, the transmission network 104, and the combiner 105. The feeding network 102 can feed the radio frequency signal to the antenna array 101 based on a specific amplitude and phase, or send a radio signal received by the antenna array 101 to a signal processing unit of the base station system through an antenna connector 106 based on a specific amplitude and phase. The radome 107 may protect an internal component from risks such as electromagnetic interference in an external environment and damage by an external foreign object.

As shown in FIG. 3 to FIG. 5, the dual-polarized antenna element 10 includes a radiator 1, a first feeding structure 2, and a second feeding structure 3.

The radiator 1 is an apparatus configured to receive/send electromagnetic waves. In some cases, the radiator converts guided wave energy from a transmitter into a radio wave, or converts a radio wave into guided wave energy, to radiate and receive the radio wave. Modulated high-frequency current energy (or guided wave energy) generated by the transmitter is transmitted to a transmitting radiator through a feeder. The radiator converts the energy into specific polarized electromagnetic wave energy and radiates the energy in a required direction. A receiving radiator converts specific polarized electromagnetic wave energy from a specific direction of space into modulated high-frequency current energy, and transmits the modulated high-frequency current energy to an input end of a receiver through a feeder.

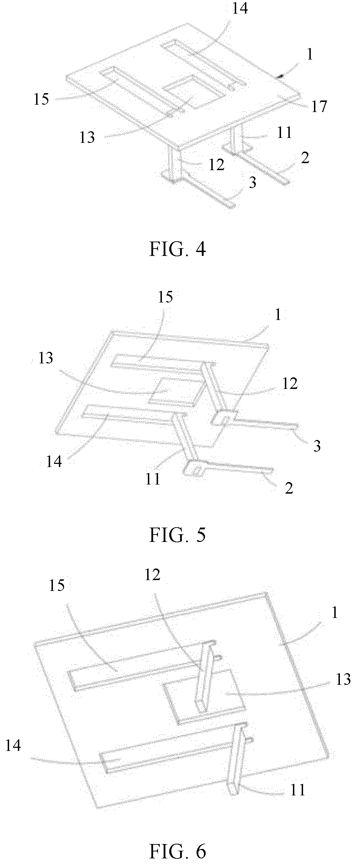

In this embodiment, as shown in FIG. 6, a first feeding part 11 and a second feeding part 12 are integrally formed on the radiator 1, and the radiator 1 is provided with a through hole 13. The first feeding part 11 and the second feeding part 12 may be configured to feed power to a corresponding part of the radiator 1, so that the radiator 1 generates ±45° dual-polarized electromagnetic waves.

The first feeding structure 2 is coupled to or directly connected to the first feeding part 11. The second feeding structure 3 is coupled to or directly connected to the second feeding part 12. The first feeding structure 2 and the second feeding structure 3 may feed power to the radiator 1 through the first feeding part 11 and the second feeding part 12 respectively. The first feeding structure 2 and the second feeding structure 3 may be conducting-wire transmission lines, coaxial transmission lines, waveguides, microstrips, or the like. In this embodiment, the first feeding structure 2 and the second feeding structure 3 are preferably microstrips. The coupling connection is a non-direct contact connection. To be specific, the first feeding structure 2 is not in contact with the first feeding part 11, and the second feeding structure 3 is not in contact with the second feeding part 12, to indirectly feed power to the radiator 1 in a coupling manner. The foregoing direct connection is a manner of implementing feeding through direct contact. In addition, the first feeding part 11 and the second feeding part 12 are integrally formed on the radiator 1, so that the radiator 1, the first feeding part 11, and the second feeding part 12 form a mechanical part, thereby simplifying a structure of the dual-polarized antenna element.

Specifically, as shown in FIG. 6, the first feeding part 11 and the second feeding part 12 are integrally formed on the radiator 1 by using a stamping and bending process. The radiator 1 may be a sheet metal part, for example, a sheet metal plate or a metal sheet with a specific thickness. During molding, stamping may be performed at a specified position on the radiator 1. A stamped part is the first feeding part 11 or the second feeding part 12. After the stamping is performed, parts of the first feeding part 11 and the second feeding part 12 are still connected to the radiator 1 and are not completely crushed, and the connected parts may be bent by using a bending process, a specific angle is formed between the first feeding part 11 and a radiation surface 17 of the radiator 1 and a specific angle is formed between the second feeding part 12 and the radiation surface 17 of the radiator 1, to complete manufacturing of the first feeding part 11 and the second feeding part 12. Therefore, in this embodiment, the radiator 1, the first feeding part 11, and the second feeding part 12 are integrally formed by using an independent sheet metal part, so that a structure is simplified, and integrity of an antenna is improved. The first feeding part 11 and the second feeding part 12 are located on two sides of the through hole 13, so that isolation between parts near the first feeding part 11 and the second feeding part 12 can be improved, thereby improving radiation performance.

In a specific embodiment, the first feeding part 11 includes one first feeding bent section, and the first feeding bent section is connected to the first feeding structure 2 to generate a first electromagnetic wave signal in a first polarization direction. The second feeding part 12 includes one second feeding bent section, and the second feeding bent section is connected to the second feeding structure 3 to generate a second electromagnetic wave signal in a second polarization direction.

Specifically, as shown in FIG. 6, after the first feeding part 11 and the second feeding part 12 are stamped and formed, a first gap 14 and a second gap 15 that run through the radiator 1 are formed at a stamped position on the radiator 1. Both the first gap 14 and the second gap 15 may be in a long strip shape. It may be understood that the first gap 14 and the second gap 15 in the long strip shape both have a long edge and a short edge. In this embodiment, the short edges of the first gap 14 and the second gap 15 are bent to form the first feeding part 11 and the second feeding part 12, so that a part near the first feeding part 11 and a part near the second feeding part 12 approximately form two polarized orthogonal antennas.

The first feeding part 11 and the second feeding part 12 are parallel to each other, facilitating processing and manufacturing, and facilitating generation of a dual-polarized electromagnetic wave on the radiator 1.

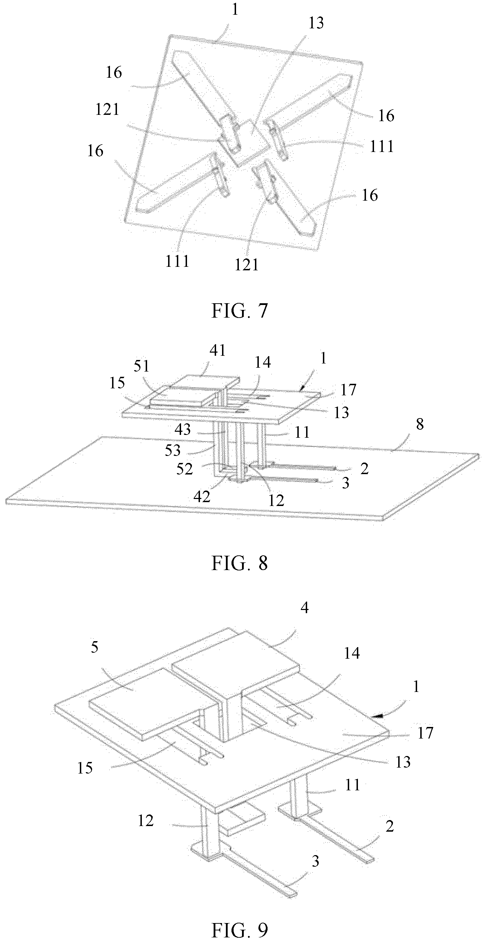

In another embodiment, as shown in FIG. 7, the radiator 1 is stamped to form four gaps 16, and the four gaps 16 are provided in a centrally symmetric manner around the through hole 13. The first feeding part 11 includes two first feeding bent sections 111, and the two first feeding bent sections 111 are respectively connected to ends of two gaps 16 that are provided in a centrally symmetric manner and that are close to the through hole 13 to generate a first electromagnetic wave signal in a first polarization direction. The second feeding part 12 includes two second feeding bent sections 121, and the two second feeding bent sections 121 are respectively connected to ends of the other two gaps 16 that are provided in a centrally symmetric manner and that are close to the through hole 13 to generate a second electromagnetic wave signal in a second polarization direction. In this way, radiation performance of the antenna can be further improved.

In addition, in this embodiment, a dual-polarized electromagnetic wave needs to be generated on a same radiator 1. In other words, a part of a region that is on the radiator 1 and that corresponds to the first feeding part 11 and a part of a region that is on the radiator 1 and that corresponds to the second feeding part 12 may approximately form two antennas whose polarization directions are mutually orthogonal. Currents between the two antennas are coupled, causing reverse cancellation of currents at some positions. Consequently, electric field distribution is uneven, and a stable directivity pattern cannot be obtained.

Therefore, as shown in FIG. 8 to FIG. 11, this embodiment provides a first balancer 4 and a second balancer 5, the through hole 13 is provided in a center of the radiator 1, and the first balancer 4 and the second balancer 5 both pass through the through hole 13. The first balancer 4 and the second balancer 5 may be of a same structure. The first balancer 4 includes a first coupling part 41 and a first ground part 42. The first coupling part 41 and the first ground part 42 are respectively located on two sides of the radiator 1. The first coupling part 41 is coupled to the radiator 1. The second balancer 5 includes a second coupling part 51 and a second ground part 52. The second coupling part 51 and the second ground part 52 are respectively located on the two sides of the radiator 1. The second coupling part 51 is coupled to the radiator 1.

The first coupling part 41 and the second coupling part 51 both keep a distance from the radiator 1, to form a coupling connection. The radiator 1 may indirectly feed power to the first coupling part 41 and the second coupling part 51. Currents on the first coupling part 41 and the second coupling part 51 can make an electric field of the radiator 1 more even, so that isolation between two parts whose polarization directions are different on the radiator 1 can meet a requirement on isolation between antennas. Therefore, a stable dual-polarized characteristic can be formed on one radiator 1, and the dual-polarized antenna element can achieve a stable directivity pattern. In addition, a size of the antenna element can be reduced, miniaturization can be implemented, and space occupation can be reduced, thereby facilitating integration into a base station antenna.

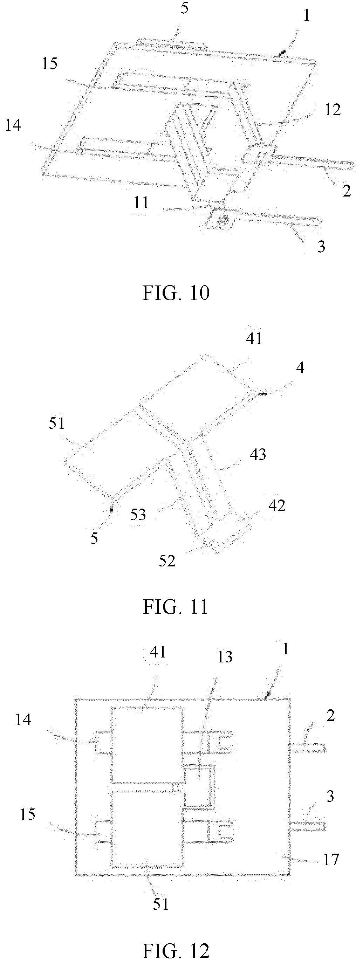

Specifically, as shown in FIG. 12, in a thickness direction of the radiator 1, projection of the first coupling part 41 and projection of at least a part of the radiator 1 overlap, and projection of the second coupling part 51 and projection of at least a part of the radiator 1 overlap. In this way, the first coupling part 41 can separately correspond to parts that are on the radiator 1 and that are located on two sides of the first gap 14, thereby improving an effect of current coupling between the first coupling part 41 and the radiator 1, and helping make an electric field near the first gap 14 more even, to obtain a stable directivity pattern. Similarly, the second coupling part 51 also has a same effect as the first coupling part 41, and details are not described herein again. Therefore, the first coupling part 41 and the second coupling part 51 can ensure overall evenness of an electric field of the dual-polarized antenna element, and ensure stability of the directivity pattern.

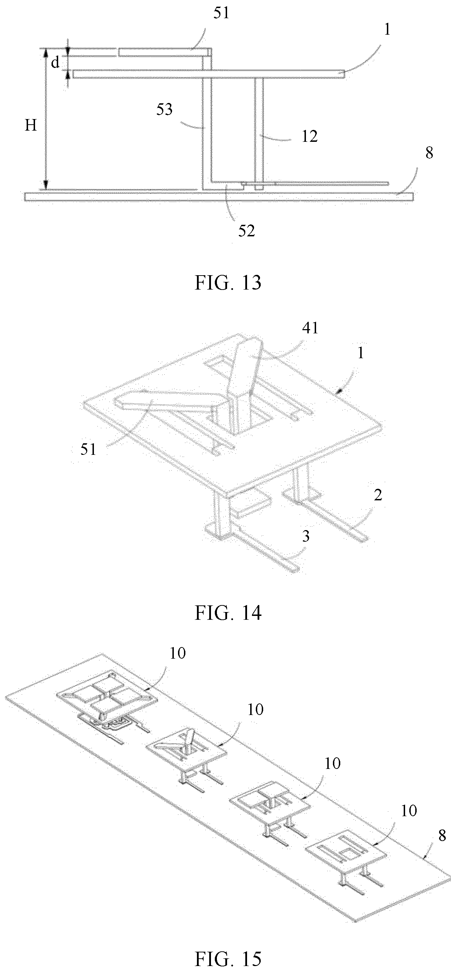

The first coupling part 41 and the second coupling part 51 may also be made of metal sheet metals, for example, thin sheet metal sheets. The first coupling part 41 and the second coupling part 51 may be in a shape such as a square, a rectangle, or a rhombus. In the dual-polarized antenna element shown in FIG. 9, the first coupling part 41 and the second coupling part 51 are rectangular. In the dual-polarized antenna element shown in FIG. 14, the first coupling part 41 and the second coupling part 51 are in a long strip shape.

Specifically, the first balancer 4 includes a first connection section 43. The first connection section 43 passes through the through hole 13. The first coupling part 41 and the first ground part 42 are respectively connected to two ends of the first connection section 43. A bending angle between the first connection section 43 and the radiation surface 17 of the radiator 1 ranges from 80° to 100°.

As shown in FIG. 11, the first connection section 43 and a second connection section 53 may also be of structures such as a metal sheet, a metal column, a transmission line, and a microstrip. Certainly, for ease of processing and manufacturing, the first coupling part 41 and the first connection section 43 may be integrally formed by using a same material, and the second coupling part 51 and the second connection section 53 may be integrally formed by using a same material. The first connection section 43 and the second connection section 53 have a large length, and may run through the through hole 13 of the radiator 1, so that the first coupling part 41 and the second coupling part 51 can be located on a same side of the radiator 1, and the first ground part 42 and the second ground part 52 are located on another side of the radiator 1 and can be close to or directly connected to the ground, to form a closed loop of a circuit.

The radiator 1 radiates an electromagnetic wave to the outside by using the radiation surface 17 of the radiator 1. It may be understood that a radiation direction of the electromagnetic wave is a direction perpendicular to the radiation surface 17, and a direction of the electric field is perpendicular to the radiation direction of the electromagnetic wave, that is, is parallel to a direction of a surface of the radiator 1. A current on the first connection section 43 and a current on the second connection section 53 flow along length directions of the first connection section 43 and the second connection section 53. If the length directions of the first connection section 43 and the second connection section 53 are parallel to the radiator 1, to be specific, if a flow direction of the current on the first connection section 43 and a flow direction of the current on the second connection section 53 are parallel to or have a small included angle with the direction of the electric field of the radiator 1, the current on the radiator 1 is coupled to the current on the first connection section 43 and the current on the second connection section 53. As a result, electric field and electromagnetic wave energy are weakened, and radiation performance of the antenna is reduced.

Therefore, in this embodiment, an angle between the first connection section 43 and the radiation surface 17 of the radiator 1 ranges from 80° to 100°. In this way, the first connection section 43 can be nearly perpendicular to the radiation surface 17 of the radiator 1. In other words, a direction of the current on the first connection section 43 is nearly perpendicular to the direction of the electric field of the radiator 1, so that the current on the first connection section 43 can be prevented from being coupled with the current on the radiator 1. Therefore, the antenna can achieve excellent radiation performance and the stable directivity pattern. Specifically, the angle between the first connection section 43 and the radiation surface 17 of the radiator 1 may be 80°, 85°, 90°, 95°, or 100°. More preferably, the first connection section 43 is perpendicular to the radiation surface 17 of the radiator 1.

Specifically, the second balancer 5 includes the second connection section 53. The second connection section 53 passes through the through hole 13. The second coupling part 51 and the second ground part 52 are respectively connected to two ends of the second connection section 53. A bending angle between the second connection section 53 and the radiation surface 17 of the radiator 1 ranges from 80° to 100°. Specifically, the angle between the second connection section 53 and the radiation surface 17 of the radiator 1 may be 80°, 85°, 90°, 95°, or 100°. More preferably, the second connection section 53 is perpendicular to the radiation surface 17 of the radiator 1. A function and an arrangement effect of the second connection section 53 are the same as those of the first connection section 43, and details are not described herein again.

A bending direction of the second coupling part 51 and a bending direction of the first coupling part 41 are opposite. After the first connection section 43 and the second connection section 53 pass through the through hole 13, the first coupling part 41 may bend in a direction of the first gap 14, and the second coupling part 51 may bend in a direction of the second gap 15. The bending direction of the first coupling part 41 and the bending direction of the second coupling part 51 are away from each other, so that the first coupling part 41 and the second coupling part 51 can be separately coupled to the radiator 1 near the first gap 14 and the second gap 15, thereby improving an electric field balance effect and helping obtain a stable directivity pattern.

Specifically, an angle between the first coupling part 41 and the radiation surface 17 of the radiator 1 and an angle between the second coupling part 51 and the radiation surface 17 of the radiator 1 range from 0° to 10°. In other words, the first coupling part 41 and the second coupling part 51 are separately nearly parallel to the radiation surface 17 of the radiator 1. In this way, the first coupling part 41 and the second coupling part 51 can have large areas and can be coupled to the radiator 1, thereby improving an effect of even distribution of the electric field. Specifically, the angle between the first coupling part 41 and the radiation surface 17 of the radiator 1 and the angle between the second coupling part 51 and the radiation surface 17 of the radiator 1 may be 0, 2°, 4°, 6°, 8°, or 10°.

In this embodiment, the first coupling part 41 and the second coupling part 51 are disposed in parallel with the radiation surface 17 of the radiator 1 separately. In this way, a capability of evenly distributing the electric field of the radiator 1 by the first coupling part 41 and the second coupling part can reach a better level.

Specifically, as shown in FIG. 13, a distance d between the first coupling part 41 and the radiation surface 17 of the radiator 1 and a distance d between the second coupling part 51 and the radiation surface 17 of the radiator 1 are less than 0.1 times a wavelength corresponding to a maximum operating frequency. In this way, a large bandwidth can be obtained, and it is ensured that the dual-polarized antenna element achieves good radiation performance and a stable directivity pattern.

Specifically, as shown in FIG. 13, a maximum distance H between the first coupling part 41 and the first ground part 42 ranges from 0.25 times to 0.75 times a wavelength corresponding to a maximum operating frequency, and a maximum distance H between the second coupling part 51 and the second ground part 52 ranges from 0.25 times to 0.75 times the wavelength corresponding to the maximum operating frequency. In this way, the dual-polarized antenna element can achieve a constant directivity pattern, and has good radiation performance and isolation performance.

Specifically, an angle between the first feeding part 11 and the radiation surface 17 of the radiator 1 and an angle between the second feeding part 12 and the radiation surface 17 of the radiator 1 range from 60° to 120°.

According to the foregoing descriptions, the radiator 1 radiates the electromagnetic wave by using the radiation surface 17 of the radiator 1. It may be understood that the radiation direction of the electromagnetic wave is a direction perpendicular to the radiation surface 17, and the direction of the electric field is perpendicular to the radiation direction of the electromagnetic wave, that is, is parallel to a direction of the surface of the radiator 1. A current on the first feeding part 11 and a current on the second feeding part 12 flow along length directions of the first feeding part 11 and the second feeding part 12. If the length directions of the first feeding part 11 and the second feeding part 12 are parallel to the radiator 1, to be specific, if a flow direction of the current on the first feeding part 11 and a flow direction of the current on the second feeding part 12 are parallel to or have a small included angle with the direction of the electric field of the radiator 1, the current on the first feeding part 11 and the current on the second feeding part 12 are coupled with the current on the radiator 1 before arriving at the radiator 1. As a result, the electric field and electromagnetic wave energy are weakened, and the radiation performance of the antenna is reduced.

Therefore, in this embodiment, the angle between the first feeding part 11 and the radiation surface 17 of the radiator 1 and the angle between the second feeding part 12 and the radiation surface 17 of the radiator 1 range from 60° to 120°. In this way, the first feeding part 11 and the second feeding part 12 can be separately nearly perpendicular to the radiation surface 17 of the radiator 1. In other words, a direction of the current on the first feeding part 11 and a direction of the current on the second feeding part 12 are nearly perpendicular to the direction of the electric field of the radiator 1, so that the current on the first feeding part 11 and the current on the second feeding part 12 can be prevented from being coupled with the current on the radiator 1 before arriving at the radiator 1. Therefore, the antenna can achieve excellent radiation performance and the stable directivity pattern. Specifically, the angle between the first feeding part 11 and the radiation surface 17 of the radiator 1 may be 60°, 70°, 80°, 90°, 100°, 110° or 120°. More preferably, the first feeding part 11 and the second feeding part 12 are separately perpendicular to the radiation surface 17 of the radiator 1.

Specifically, as shown in FIG. 8, the dual-polarized antenna element further includes a reflection panel 8. The reflection panel 8 is located on a side that is of the radiator 1 and that is away from the radiation surface 17 of the radiator 1. The first ground part 42 and the second ground part 52 are separately coupled to or directly connected to the reflection panel 8.

The reflection panel 8 may be a metal sheet metal part, and may reflect an electromagnetic wave. It should be noted that two sides of the radiator 1 may radiate an electromagnetic wave. After the dual-polarized antenna element is integrated into the base station antenna, an electromagnetic wave radiated by a side that is of the radiator 1 and that faces the outside is a mainly received electromagnetic wave. A surface of this side of the radiator 1 may be defined as the radiation surface 17. An electromagnetic wave radiated by the other side of the radiator 1 is blocked by an object, causing an energy loss.

In this embodiment, to reduce the energy loss, the reflection panel 8 may be disposed on a side that is of the radiator 1 and that is away from the radiation surface 17. The reflection panel 8 can reflect an electromagnetic wave radiated by the surface that is of the radiator 1 and that is away from the radiation surface 17, so that a radiation direction of the reflected electromagnetic wave is consistent with a radiation direction of the radiation surface 17, thereby enhancing electromagnetic wave energy, improving signal reception sensitivity of the antenna, blocking and shielding interference from other electromagnetic waves from the back (a reverse direction) on a received signal, and improving antenna radiation performance.

The reflection panel 8 may be used as a ground of the antenna, and the first ground part 42 and the second ground part 52 may not contact the reflection panel 8 to implement coupled indirect grounding, or may contact the reflection panel 8 directly to implement direct grounding.

Specifically, as shown in FIG. 15, a plurality of dual-polarized antenna elements 10 may share one reflection panel 8, and the plurality of dual-polarized antenna elements 10 form the antenna array 101. In this way, integrity of the plurality of dual-polarized antenna elements 10 can be improved, and radiation performance of the antenna apparatus 100 having the plurality of dual-polarized antenna elements 10 can be improved.

Specifically, as shown in FIG. 11, the first ground part 42 and the second ground part 52 are connected to form an integrated structure. In this way, grounding consistency between the first balancer 4 and the second balancer 5 can be ensured. The first balancer 4 and the second balancer 5 may alternatively be designed as one part, facilitating production and manufacturing, and facilitating assembly of the balancer in the dual-polarized antenna element.

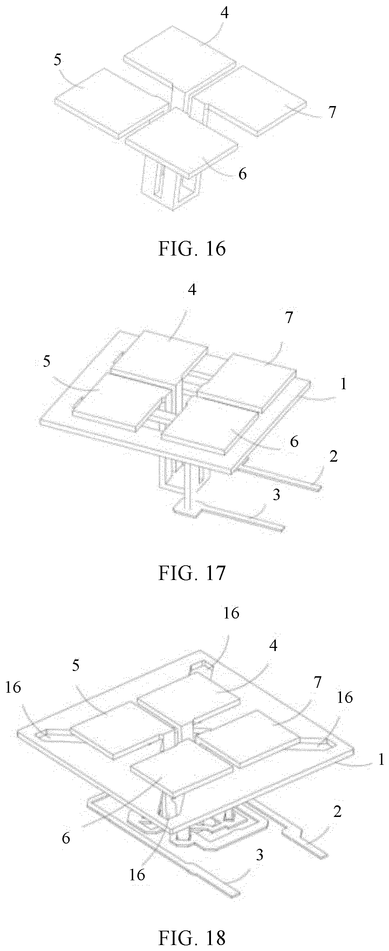

Specifically, as shown in FIG. 16 to FIG. 18, the dual-polarized antenna element further includes a third balancer 6 and a fourth balancer 7. Structures of the third balancer 6 and the fourth balancer 7 may be the same as structures of the first balancer 4 and the second balancer 5. The third balancer 6 and the fourth balancer 7 both pass through the through hole 13. The third balancer 6 is centrally symmetrical to the first balancer 4. The fourth balancer 7 is centrally symmetrical to the second balancer 5. The third balancer 6 and the first balancer 4 correspond to one type of polarization, and the fourth balancer 7 and the second balancer 5 correspond to the other type of polarization. Through the provision of the four balancers, the dual-polarized antenna element can obtain a better polarization effect. As shown in FIG. 16, the first balancer 4, the second balancer 5, the third balancer 6, and the fourth balancer 7 share a same ground part, in other words, the first balancer 4, the second balancer 5, the third balancer 6, and the fourth balancer 7 form an integrated structure, and form an independent part, to facilitate producing and manufacturing, and assembly in the dual-polarized antenna element.

In an embodiment, as shown in FIG. 17, the radiator 1 has a first gap 14 and a second gap 15. The first balancer 4 and the fourth balancer 7 correspond to the first gap 14. The second balancer 5 and the third balancer 6 correspond to the second gap 15. The first balancer 4 and the third balancer 6 correspond to one type of polarization, and the second balancer 5 and the fourth balancer 7 correspond to the other type of polarization.

In another embodiment, as shown in FIG. 18, there are four gaps 16 on the radiator 1. The first balancer 4, the second balancer 5, the third balancer 6, and the fourth balancer 7 each correspond to one gap 16. The two balancers that are disposed in a centrally symmetric manner correspond to one type of polarization, so that an effect of balancing an electric field around the radiator 1 can be improved, and radiation performance of the antenna can be improved.

Specifically, the dual-polarized antenna element further includes a plastic support (not shown in the figure), the balancers, the radiator 1, and the feeding part may be fastened on the plastic support. The plastic support may be installed on a structure such as the reflection panel 8, to implement installation and fastening of the dual-polarized antenna element.

The foregoing descriptions are merely embodiments of this application, and are not intended to limit this application. For a person skilled in the art, this application may have various modifications and variations. Any modification, equivalent replacement, or improvement made without departing from the spirit and principle of this application shall fall within the protection scope of this application.

## Claims

1. A dual-polarized antenna element, comprising:
a radiator, wherein a first feeding part and a second feeding part are integrally formed on the radiator, the radiator is provided with a through hole, and the through hole is located between the first feeding part and the second feeding part;
a first feeding structure, coupled to or directly connected to the first feeding part;
a second feeding structure, coupled to or directly connected to the second feeding part;
a first balancer, wherein the first balancer passes through the through hole, the first balancer comprises a first coupling part and a first ground part, the first coupling part and the first ground part are respectively located on two sides of the radiator, and the first coupling part is coupled to the radiator; and
a second balancer, wherein the second balancer passes through the through hole, the second balancer comprises a second coupling part and a second ground part, the second coupling part and the second ground part are respectively located on the two sides of the radiator, and the second coupling part is coupled to the radiator.

2. The dual-polarized antenna element according to claim 1, wherein the first feeding part comprises one first feeding bent section, and the first feeding bent section is connected to the first feeding structure to generate a first electromagnetic wave signal in a first polarization direction; and
the second feeding part comprises one second feeding bent section, and the second feeding bent section is connected to the second feeding structure to generate a second electromagnetic wave signal in a second polarization direction.

3. The dual-polarized antenna element according to claim 1, wherein the first feeding part comprises two first feeding bent sections, and the two first feeding bent sections are disposed in a centrally symmetric manner to generate a first electromagnetic wave signal in a first polarization direction; and
the second feeding part comprises two second feeding bent sections, and the two second feeding bent sections are disposed in a centrally symmetric manner to generate a second electromagnetic wave signal in a second polarization direction.

4. The dual-polarized antenna element according to any one of claims 1 to 3, wherein in a thickness direction of the radiator, projection of the first coupling part and projection of at least a part of the radiator overlap, and projection of the second coupling part and projection of at least a part of the radiator overlap.

5. The dual-polarized antenna element according to any one of claims 1 to 3, wherein the first balancer comprises a first connection section, the first connection section passes through the through hole, the first coupling part and the first ground part are respectively connected to two ends of the first connection section, and an angle between the first connection section and a radiation surface of the radiator ranges from 80° to 100°.

6. The dual-polarized antenna element according to claim 5, wherein the second balancer comprises a second connection section, the second connection section passes through the through hole, the second coupling part and the second ground part are respectively connected to two ends of the second connection section, an angle between the second connection section and the radiation surface of the radiator ranges from 80° to 100°, and a bending direction of the second coupling part and a bending direction of the first coupling part are opposite.

7. The dual-polarized antenna element according to claim 5, wherein an angle between the first coupling part and the radiation surface of the radiator and an angle between the second coupling part and the radiation surface of the radiator range from 0° to 10°.

8. The dual-polarized antenna element according to claim 7, wherein the first coupling part and the second coupling part are separately parallel to the radiation surface of the radiator.

9. The dual-polarized antenna element according to any one of claims 1 to 8, wherein a distance between the first coupling part and the radiation surface of the radiator and a distance between the second coupling part and the radiation surface of the radiator are less than 0.1 times a wavelength corresponding to a maximum operating frequency.

10. The dual-polarized antenna element according to any one of claims 1 to 8, wherein a maximum distance between the first coupling part and the first ground part ranges from 0.25 times to 0.75 times a wavelength corresponding to a maximum operating frequency, and a maximum distance between the second coupling part and the second ground part ranges from 0.25 times to 0.75 times the wavelength corresponding to the maximum operating frequency.

11. The dual-polarized antenna element according to any one of claims 1 to 8, wherein an angle between the first feeding part and the radiation surface of the radiator and an angle between the second feeding part and the radiation surface of the radiator range from 60° to 120°.

12. The dual-polarized antenna element according to any one of claims 1 to 8, wherein the dual-polarized antenna element further comprises a reflection panel, the reflection panel is located on a side that is of the radiator and that is away from the radiation surface of the radiator, and the first ground part and the second ground part are separately coupled to or directly connected to the reflection panel.

13. The dual-polarized antenna element according to claim 12, wherein a plurality of dual-polarized antenna elements share one reflection panel.

14. The dual-polarized antenna element according to claim 12, wherein the first ground part and the second ground part are connected to form an integrated structure.

15. The dual-polarized antenna element according to any one of claims 1 to 8, wherein the dual-polarized antenna element further comprises a third balancer and a fourth balancer, structures of the third balancer and the fourth balancer are the same as structures of the first balancer and the second balancer, the third balancer and the fourth balancer both pass through the through hole, the third balancer is centrally symmetrical to the first balancer, and the fourth balancer is centrally symmetrical to the second balancer.

16. The dual-polarized antenna element according to any one of claims 1 to 8, wherein the radiator is a metal plate.

17. The dual-polarized antenna element according to any one of claims 1 to 8, wherein the first feeding part and the second feeding part are integrally formed on the radiator by using a stamping and bending process.

18. An antenna apparatus, comprising the dual-polarized antenna element according to any one of claims 1 to 17.

19. A base station system, comprising the antenna apparatus according to claim 18.
